# EUROPEAN PATENT APPLICATION

(11) **EP 2 431 699 A1**
(43) Date of publication of application: **21.03.2012**
(21) Application number: 10177578.1
(22) Date of filing: 20.09.2010
(51) Int. Cl.: F28D 9/00, F28F 3/12, F28F 3/04

(54) **Cooling apparatus**

(71) Applicant: Thermal Corp., Wilmington DE 19803 (US)
(72) Inventor: The designation of the inventor has not yet been filed
(74) Representative: Vinsome, Rex Martin

(57) **Abstract**

A cooling apparatus (2) for extracting heat from coolant liquid passing through the apparatus is disclosed. The apparatus comprises a body (4) defining a coolant chamber (6) having an inlet (8) for entry of coolant liquid into the coolant chamber and an outlet (10) for exit of coolant liquid from the coolant chamber, and (ii) a plurality of heat exchange fins (12, 14) defining a plurality of channels (18) for enabling flow of coolant liquid along a plurality of the channels and enabling heat exchange between the coolant liquid and the heat exchange fins. A plurality of the heat exchange fins are arranged such that at least a portion of the coolant liquid passes in use along a plurality of the channels in passing from the inlet to the outlet.

## Description

The present invention relates to a cooling apparatus, and relates particularly, but not exclusively, to a cooling apparatus using liquid nanofluid coolants.

Nanofluid coolants, i.e. coolants comprising liquid suspensions containing particles significantly smaller than 100 nanometres in at least one dimension, are found to have bulk thermal conductivities orders of magnitudes higher than the base liquids used for such coolants. This provides the advantage of enabling the nanofluids to then be used as coolants in high heat flux applications, such as superconducting magnets, superfast computing and high power microwave tubes.

Thermal properties of aqueous suspensions of carbon nanotubes are described in Yulong Ding et al, "Heat transfer of aqueous suspensions of carbon nanotubes (CNT nanofluids)", International Journal of Heat and Mass Transfer 49 (2006), 240 - 250, and Dongsheng Wen et al, "Experimental investigation into convective heat transfer of nanofluids at the entrance region under laminar flow conditions", International Journal of Heat and Mass Transfer 47 (2004), 5181 - 5188. It is observed that the rate of heat transfer in a tube through which nanofluid coolant flows is greatest adjacent the entrance to the tube.

Preferred embodiments of the present invention seek to provide more effective cooling apparatus than in the prior art.

According to the present invention, there is provided a cooling apparatus for extracting heat from coolant liquid passing through said apparatus, the apparatus comprising a body defining (i) at least one coolant chamber having at least one inlet for entry of coolant liquid into at least one said coolant chamber and at least one outlet for exit of coolant liquid from at least one said coolant chamber, and (ii) a plurality of heat exchange members defining a plurality of channels for enabling flow of coolant liquid along a plurality of said channels and enabling heat exchange between said coolant liquid and said heat exchange members, wherein a plurality of said heat exchange members are arranged such that at least a portion of said coolant liquid passes in use along a plurality of said channels in passing from at least one said inlet to at least one said outlet.

The present invention is based on the surprising discovery that in the case of a nanofluid coolant flowing along a channel, maximum effectiveness of heat transfer occurs adjacent the inlet of the channel. By providing a plurality of channels such that at least a portion of the coolant liquid passes along a plurality of channels as it passes through the apparatus, therefore, this provides the advantage of causing the fluid to pass a plurality of inlets, which in turn enhanced the cooling effect as the coolant liquid passes along the channels.

A plurality of channels may be substantially aligned with each other in the direction of fluid flow along the channels.

This provides the advantage of minimising turbulence of the coolant liquid flow, which in turn maximises effectiveness of cooling.

A plurality of said heat exchange members may have rounded portions in regions defining inlets to a plurality of said channels.

This provides the advantage of further reducing turbulence of coolant liquid flow and thereby maximising effectiveness of cooling.

The apparatus may further comprise fluid deflector means adjacent at least one said inlet of said body.

This provides the advantage of causing distribution of coolant fluid flow along more channels in a direction transverse to the channels, thereby maximising effectiveness of cooling.

Said flow deflector means may comprise at least one fluid deflector member arranged adjacent at least one said inlet of said body.

The apparatus may further comprise at least one weir portion arranged between at least one said inlet of said body and said heat exchange members.

This provides the advantage of causing further distribution of coolant fluid flow along more channels in a direction transverse to the channels, thereby maximising effectiveness of cooling.

The body may further define a first region between the or each said inlet of said body and said heat exchange members adjacent to said inlet, and a second region adjacent the or each said outlet and said flow exchange members adjacent to said outlet, wherein said first and second regions have substantially equal volumes.

This provides the advantage of minimising turbulence of flow of coolant liquid passing through the apparatus, thereby enhancing effectiveness of cooling.

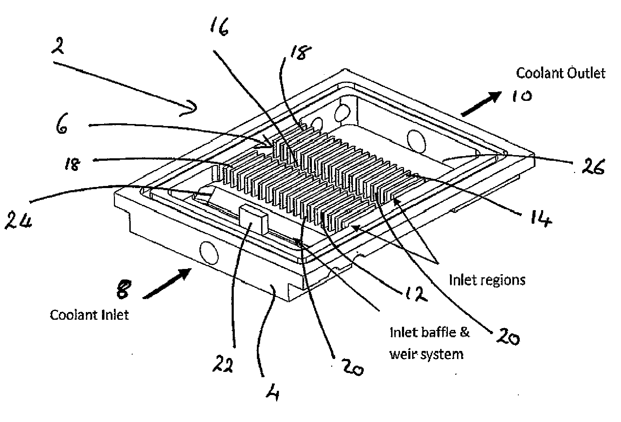

A preferred embodiment of the invention will now be described, by way of example only, and not in any limitative sense, with reference to the accompanying drawing, in which Figure 1 shows a schematic perspective view of a cooling apparatus embodying the present invention with a cover thereof removed.

Referring to Figure 1, a cooling apparatus 2 embodying the present invention comprises a body 4 of thermally conductive material such as metal. The body 4 defines a cooling chamber 6 having an inlet 8 to enable nanofluid coolant (not shown) to enter the chamber 6 and an outlet 10 to enable the nanofluid coolant to exit the chamber 6 after it has been in thermal contact with heat exchange fins 12, 14.

The heat exchange fins 12, 14 are arranged in a first row 12 and a second row 14, separated by a gap 16, defining respective first and second rows of fluid channels 18. The channels 18 are therefore arranged in axially aligned pairs, each channel having an inlet 20. The heat exchange fins 12, 14 have rounded edges at the inlets 20 of each channel 18 to minimise turbulence of flow of coolant fluid along the heat exchange channels 18. The channels 18 are arranged in a longitudinally aligned relationship in the direction of fluid flow so that fluid passing from the inlet 8 to the outlet 10 of the body 4 passes along more than one heat exchange channel 18. The channels 18 can range in width from about 0.8 mm to about 2.5 mm, and the heat exchange fins 12, 14 can range in height from about 2.5mm to about 15mm and from about 0.5 mm to 4 mm in fin thickness. The channels can be from about 10mm to about 500mm in length. The surfaces of the heat transfer faces within the cooling chamber 6 preferably have a smooth finish of at least 6 microns.

The smooth surfaces and rounded edges of the fins 12, 14 minimise agglomeration and collection of the nanoparticles normally suspended in the coolant solution. This in turn minimises the extent to which the article concentration in the other parts of the coolant solution becomes too low to carry out effective cooling.

An inlet baffle member 22 is provided adjacent the inlet 8 to impede direct flow of coolant fluid from the inlet 8 to the heat exchange fins 12, and a weir 24 cooperates with the inlet baffle 22 to distribute fluid entering the inlet 8 laterally to the direction of fluid flow to distribute the fluid across the heat exchange channels 18. A void 26 arranged between the downstream heat exchange fins 14 and the outlet 10 is substantially equal in volume to the region between the inlet 8 and the upstream heat exchange fins 12, in order to minimise turbulence of flow of coolant fluid through the apparatus 2.

It has been found that thermal enhancements of approximately 14% and approximately 37% compared with prior art apparatus are achieved for cooling apparatus 2 made from A1203 and Ti02 respectively.

It will be appreciated by persons skilled in the art that the above embodiment has been described by way of example only, and not in any limitative sense, and that various alterations and modifications are possible without departure from the scope of the invention as defined by the appended claims.

## Claims

1. A cooling apparatus for extracting heat from coolant liquid passing through said apparatus, the apparatus comprising a body defining (i) at least one coolant chamber having at least one inlet for entry of coolant liquid into at least one said coolant chamber and at least one outlet for exit of coolant liquid from at least one said coolant chamber, and (ii) a plurality of heat exchange members defining a plurality of channels for enabling flow of coolant liquid along a plurality of said channels and enabling heat exchange between said coolant liquid and said heat exchange members, wherein a plurality of said heat exchange members are arranged such that at least a portion of said coolant liquid passes in use along a plurality of said channels in passing from at least one said inlet to at least one said outlet.

2. An apparatus according to claim 1, wherein a plurality of channels are substantially aligned with each other in the direction of fluid flow along the channels.

3. An apparatus according to claim 1 or 2, wherein a plurality of said heat exchange members have rounded portions in regions defining inlets to a plurality of said channels.

4. An apparatus according to any one of the preceding claims, further comprising fluid deflector means adjacent at least one said inlet of said body.

5. An apparatus according to claim 4, wherein said flow deflector means comprises at least one fluid deflector member arranged adjacent at least one said inlet of said body.

6. An apparatus according to any one of the preceding claims, further comprising at least one weir portion arranged between at least one said inlet of said body and said heat exchange members.

7. An apparatus according to any one of the preceding claims, wherein the body further defines a first region between the or each said inlet of said body and said heat exchange members adjacent to said inlet, and a second region adjacent the or each said outlet and said flow exchange members adjacent to said outlet, wherein said first and second regions have substantially equal volumes.
